(19) Europäisches Patentamt
European Patent Office
Office européen des brevets

(11) EP 4 625 588 A1

(12) **EUROPEAN PATENT APPLICATION**

(43) Date of publication:
**01.10.2025 Bulletin 2025/40**

(21) Application number: **25164478.7**

(22) Date of filing: **18.03.2025**

(51) International Patent Classification (IPC):
***H01M 10/0567*** *(2010.01)* ***H01M 10/0525*** *(2010.01)*
***H01M 4/133*** *(2010.01)* *H01M 4/02 (2006.01)*
*H01M 4/525 (2010.01)* *H01M 10/0568 (2010.01)*
*H01M 10/0569 (2010.01)*

(52) Cooperative Patent Classification (CPC):
**H01M 10/0525; H01M 4/133; H01M 10/0567;**
H01M 4/525; H01M 10/0568; H01M 10/0569;
H01M 2004/021; H01M 2004/027; H01M 2300/0025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 CN 202410346792**

(71) Applicant: **Ningde Amperex Technology Ltd.**
**Ningde City, Fujian Province 352100 (CN)**

(72) Inventors:
- **ZHANG, Lilan**
  **Ningde City, Fujian Province 352100 (CN)**
- **PENG, Xiexue**
  **Ningde City, Fujian Province 352100 (CN)**
- **WU, Mingyong**
  **Ningde City, Fujian Province 352100 (CN)**
- **TANG, Chao**
  **Ningde City, Fujian Province 352100 (CN)**

(74) Representative: **Icosa**
**83 avenue Denfert-Rochereau**
**75014 Paris (FR)**

(54) **LITHIUM-ION SECONDARY BATTERY AND ELECTRIC APPARATUS**

(57) A lithium-ion secondary battery includes an electrolyte, a positive electrode plate, a separator, and a negative electrode plate. The electrolyte includes a first additive and a second additive, based on a mass of the electrolyte, $W_1$% is a mass percentages of the first additive and $W_2$% is a mass percentages of the second additive, $0.05 \leq W_1 \leq 0.8$ and $0.01 \leq W_2 \leq 4.1$. The negative electrode plate includes a negative electrode current collector and a negative electrode material layer containing a negative electrode active material.

EP 4 625 588 A1

## Description

### TECHNICAL FIELD

This application relates to the field of electrochemical technologies, and in particular, to a lithium-ion secondary battery and an electric apparatus.

### BACKGROUND

Lithium-ion secondary batteries have many advantages such as high energy density, long cycle life, high nominal voltage, and low self-discharge rate. In recent years, they have been widely used in energy storage power systems such as hydroelectric power plants, thermal power plants, wind power plants, and solar power plants, as well as in electric bicycles, electric motorcycles, electric vehicles, military equipment, aerospace, and other fields, with a broad application prospect. New application fields have also imposed higher requirements on the energy density, cycling performance, rate performance, and safety performance of lithium-ion secondary batteries.

The charge and discharge rate performance of lithium-ion secondary batteries is an important indicator of the charging speed of the batteries, which is directly related to the migration ability of lithium ions at the interfaces between positive and negative electrodes, an electrolyte, and their interfaces. However, when the rate performance is improved, the cycling stability of lithium-ion secondary batteries often decreases, making it difficult to satisfy the comprehensive practical requirements for high rate performance and good cycle life. At present, how to improve the charging capability of the battery while ensuring the cycling stability of the battery has become one of the difficulties and bottlenecks in the design of lithium-ion secondary batteries.

### SUMMARY

The objectives of this application are to provide a lithium-ion secondary battery and an electric apparatus to improve the charging capability of the battery while ensuring the cycling stability of the battery. Specific technical solutions are as follows:

According to a first aspect, this application provides a lithium-ion secondary battery. The lithium-ion secondary battery includes an electrolyte, a positive electrode plate, and a negative electrode plate. The electrolyte includes a first additive and a second additive.

The first additive includes at least one of the compounds represented by formula I to formula IV:

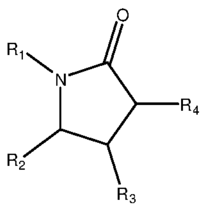

I

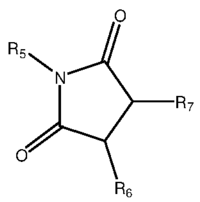

II

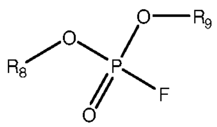

III

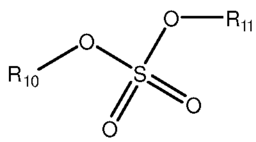

IV

where $R_1$ to $R_{11}$ are each independently selected from hydrogen, fluorine, and fluorine-substituted or unsubstituted $C_1$ to $C_6$ alkyl groups; the second additive includes at least one of vinylene carbonate (VC), 1,3-propanesultone (PS), or lithium difluorophosphate ($LiPF_2O_2$); and based on a mass of the electrolyte, mass percentages $W_1$% and $W_2$% of the first additive and the second additive respectively satisfy: $0.05 \leq W_1 \leq 0.8$ and $0.01 \leq W_2 \leq 4.1$.

The negative electrode plate includes a negative electrode current collector and a negative electrode material layer disposed on at least one surface of the negative electrode current collector, the negative electrode material layer including a negative electrode active material, where Dn50 of the negative electrode active material satisfies: 2.5 μm≤Dn50≤9 μm, and Dn10 and Dn90 of the negative electrode active material satisfy: Dn90-Dn10≤16 μm. The first additive and the second additive of this application can form stable interfaces on the surfaces of the positive electrode active material and the negative electrode active material. The addition amounts of the first additive and the second additive and the particle size of the negative electrode active material are controlled within the ranges specified in this application, so that a moderately thick and uniform protective layer having similar SEI (Solid electrolyte Interface, Solid electrolyte Interface) components can be formed on a surface of the negative electrode active material during a battery formation process. The uniform thickness of the SEI protective layer and the uniform and moderate particle size of the negative electrode active material can reduce the uneven lithium intercalation at different positions of the negative electrode plate during high-rate charging of the lithium-ion secondary battery, and mitigate the problem of intercalation of

excessive lithium ions in some positions of the negative electrode active material, effectively prolonging a lifecycle of the negative electrode active material, and ensuring the cycling stability of the battery. Moreover, a moderately thick SEI protective layer further enhances the charging capability.

In one embodiment of this application, the particle size of the negative electrode active material satisfies: Dn90-Dn10≤13 μm. The particle size of the negative electrode active material is controlled within the foregoing range, ensuring a more uniform particle size distribution of the negative electrode active material. This is conducive to forming an SEI protective layer having a more uniform thickness on a negative electrode surface during high-rate charging, prolonging the lifecycle of the negative electrode active material, and providing better cycling stability and charging capability for the battery.

In one embodiment of this application, based on a mass of the electrolyte, the mass percentages $W_1$% and $W_2$% of the first additive and the second additive satisfy: $0.1 \leq W_1 + W_2 \leq 4.5$.

In one embodiment of this application, the first additive includes at least one of the following compounds:

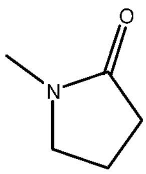
1

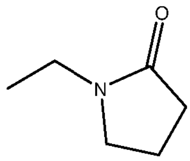
2

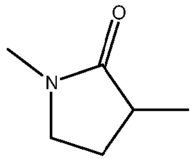
3

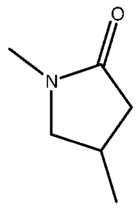
4

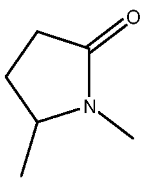
5

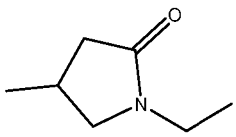
6

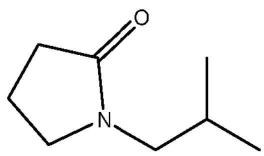
7

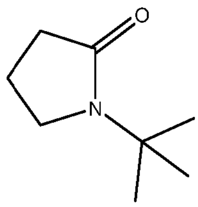
8

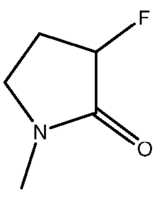
9

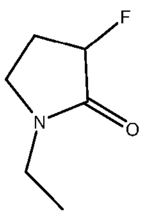
10

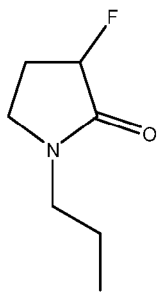
11

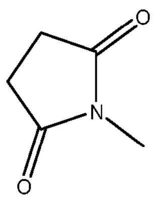
12

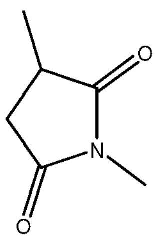
13

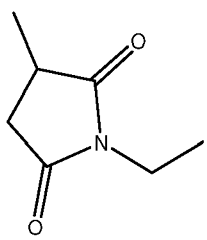
14

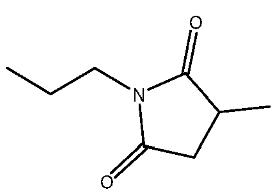
15

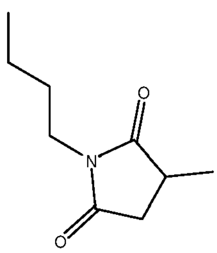
16

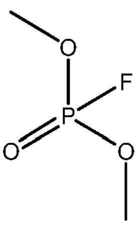 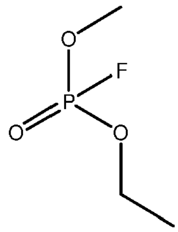 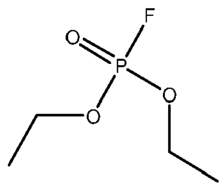 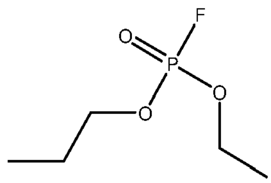

17 18 19 20

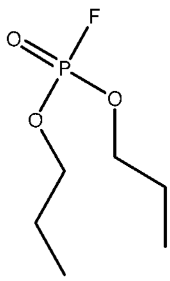 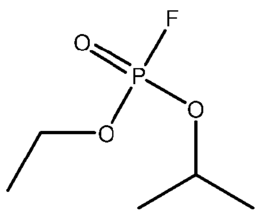 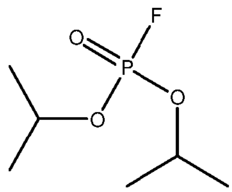 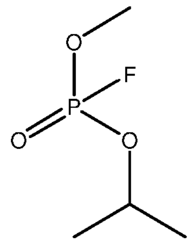

21 22 23 24

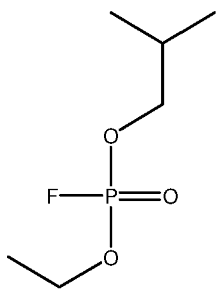 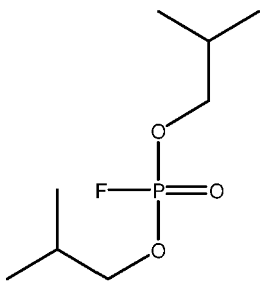 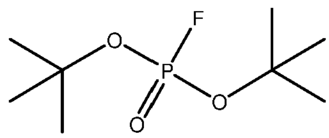

25 26 27

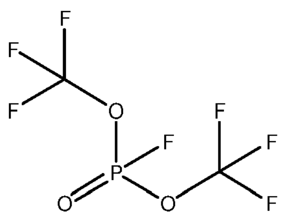 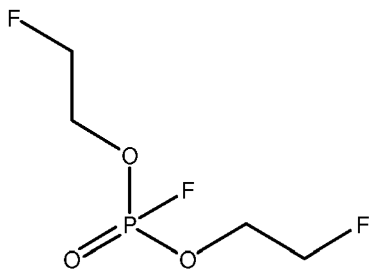 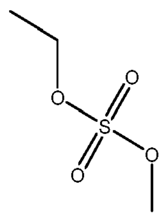

28 29 30

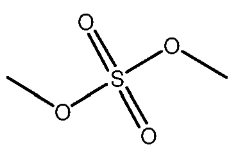 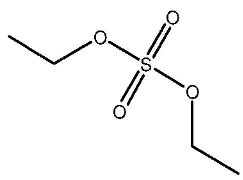 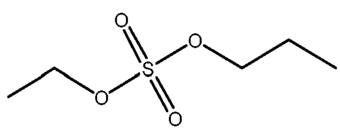

31 32 33

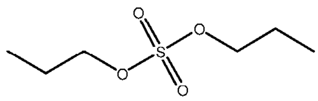
34
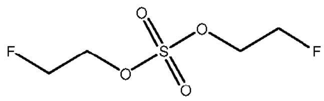
35
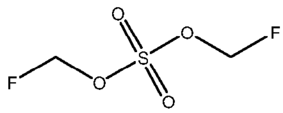
36.

In one embodiment of this application, the electrolyte includes electrolytic salts $LiPF_6$ and LiFSI, and a molar ratio of $LiPF_6$ to LiFSI is 1:1 to 5.7:1. LiFSI is used in combination with $LiPF_6$, which can enhance the transmission capability of lithium ions in the electrolyte. A sulfur-rich and phosphorus-rich inorganic SEI/CEI (Chemical-electrochemical Interface, chemical-electrochemical Interface) interface is formed on an electrode surface, which reduces the transmission impedance of lithium ions and enhances interfacial stability, thereby enabling the lithium-ion secondary battery to have good charging capability and prolonging the cycle life of the lithium-ion secondary battery.

In one embodiment of this application, the positive electrode plate includes a positive electrode active material $LiNi_xCo_yMn_zO_2$, where x+y+z=1, $0.3 \le x \le 0.9$, and $0.1 \le z \le 0.7$. The first additive and the second additive added to the electrolyte are more easily to decompose and form a film on a surface of a nickel-cobalt-manganese ternary material, so that a moderately thick and uniform protective film can be formed on the electrode surface. This enables the lithium-ion secondary battery using the ternary material in a positive electrode to have good charging capability, and also prolongs the cycle life of the lithium-ion secondary battery.

In one embodiment of this application, $W_2$ and z satisfy: $0.4 \le W_2/z \le 30$. The Mn dissolved from a positive electrode side of the lithium-ion secondary battery is easily reduced and deposited on a negative electrode, inhibiting the intercalation of lithium ions and leading to continuous side reactions, thereby severely affecting the cycling capacity retention rate of the battery. The second additive can react on the positive electrode side and effectively inhibit the dissolution of Mn. Therefore, controlling the amounts of the second additive and Mn atoms within a specified proportional range can effectively inhibit the dissolution of Mn and enhance the intercalation of lithium ions, thereby enhancing the charging capability of the battery.

In one embodiment of this application, the electrolyte includes ethylene carbonate, and based on a total mass of the electrolyte, a mass percentage $W_3$% of ethylene carbonate satisfies: $18 \le W_3 \le 30$. Adding ethylene carbonate to the electrolyte can enhance the interface film formation on the negative electrode side, so that an effective passivation layer can be formed before the deposition of Mn and Co to isolate the transmission of electrons, thereby inhibiting the deposition of Mn and Co on the negative electrode and improving the intercalation rate of lithium ions.

In one embodiment of this application, $20 \le W_3 \le 27$.

According to a second aspect, this application provides an electric apparatus, where the electric apparatus includes the lithium-ion secondary battery according to any one of the foregoing embodiments. Therefore, the electric apparatus has good practical performance.

This application has the following beneficial effects:

This application provides a lithium-ion secondary battery and an electric apparatus. The lithium-ion secondary battery includes the electrolyte, the positive electrode plate, and the negative electrode plate. The electrolyte includes the first additive and the second additive, the first additive including at least one of the compounds represented by formula I to formula IV, and the second additive including at least one of vinylene carbonate, 1,3-propanesultone, or lithium difluorophosphate; and based on the mass of the electrolyte, mass percentages $W_1$% and $W_2$% of the first additive and the second additive respectively satisfy: $0.05 \le W_1 \le 0.8$ and $0.01 \le W_2 \le 4.1$. The negative electrode plate includes the negative electrode current collector and the negative electrode material layer disposed on at least one surface of the negative electrode current collector, the negative electrode material layer including a negative electrode active material, where Dn50 of the negative electrode active material satisfies: 2.5 $\mu$m≤Dn50≤9 $\mu$m, and Dn10 and Dn90 satisfy: Dn90-Dn10≤16 $\mu$m. The addition amounts of the first additive and the second additive and the particle size of the negative electrode active material are controlled within the ranges specified in this application, so that the moderately thick and uniform protective layer having similar SEI components can be formed on the surface of the negative electrode active material during the battery formation process. This reduces the uneven lithium intercalation at different positions of the negative electrode plate during high-rate charging of the lithium-ion secondary battery, and mitigates the problem of intercalation of excessive lithium ions in some positions of the negative electrode active material, effectively prolonging the lifecycle of the negative electrode active material, ensuring the cycling stability of the battery, and further enhancing the charging capability.

Certainly, when any one of the products or methods of this application is implemented, the advantages described above are not necessarily demonstrated all at the same time.

## DETAILED DESCRIPTION

The following clearly and completely describes the technical solutions in some embodiments of this application.

Apparently, the described embodiments are only some but not all of these embodiments of this application. All other embodiments obtained by persons skilled in the art based on this application shall fall within the protection scope of this application.

According to a first aspect, this application provides a lithium-ion secondary battery and an electric apparatus. The lithium-ion secondary battery includes an electrolyte, a positive electrode plate, and a negative electrode plate, where the electrolyte includes a first additive and a second additive; the first additive includes at least one of compounds represented by formula I to formula IV; the second additive includes at least one of vinylene carbonate, 1,3-propanesultone, or lithium difluorophosphate; and based on a mass of the electrolyte, mass percentages $W_1$% and $W_2$% of the first additive and the second additive respectively satisfy: $0.05 \leq W_1 \leq 0.8$ and $0.01 \leq W_2 \leq 4.1$. The negative electrode plate includes a negative electrode current collector and a negative electrode material layer disposed on at least one surface of the negative electrode current collector, the negative electrode material layer including a negative electrode active material, where Dn50 of the negative electrode active material may be 2.5 μm to 9 μm, and Dn10 and Dn90 of the negative electrode active material satisfy: Dn90-Dn10≤16 μm. The inventors have found through research that adding the first additive and the second additive to the electrolyte and controlling the addition amounts thereof within the ranges specified in this application can form a moderately thick and uniform protective layer having similar SEI components on a surface of the negative electrode active material during a battery formation process, thereby enhancing the stability of a negative electrode interface. Adding the negative electrode active material to the negative electrode material layer and controlling a particle size of the negative electrode active material within the range specified in this application can mitigate the problem of intercalation of excessive lithium ions in some positions of the negative electrode active material, effectively prolonging a lifecycle of the negative electrode active material, ensuring the cycling stability of the battery, and further enhancing the charging capability.

In some embodiments of this application, based on the mass of the electrolyte, the mass percentage $W_1$% of the first additive may be 0.05, 0.07, 0.1, 0.2, 0.3, 0.5, 0.6, 0.7, or 0.8, or falls within a range defined by any two of these values; and the mass percentage $W_2$% of the second additive may be 0.01, 0.05, 0.1, 0.5, 1, 2, 3, 4, or 4.1, or falls within a range defined by any two of these values.

In some embodiments of this application, Dn50 of the negative electrode active material satisfies: 2.5 μm≤Dn50≤9 μm, and Dn10 and Dn90 satisfy: Dn90-Dn10≤13 μm. A smaller difference between Dn90 and Dn10 means a more uniform particle size distribution of the negative electrode active material. During the battery formation process, the moderately thick and uniform protective layer having similar SEI components can be formed, enhancing the electrochemical stability and charging capability of active material particles during a cycling process.

In some embodiments of this application, based on the mass of the electrolyte, a sum of the mass percentage $W_1$% of the first additive and the mass percentage $W_2$% of the second additive satisfies: $0.1 \leq W_1+W_2 \leq 4.5$. For example, the value of $W_1+W_2$ may be 0.1, 0.5, 1, 1.5, 2, 2.5, 3, 3.5, 4, or 4.5, or falls within a range defined by any two of these values.

In some embodiments of this application, the first additive includes at least one of the following compounds:

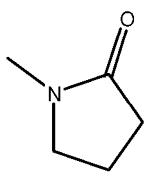
1

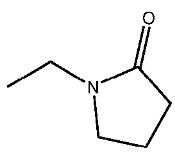
2

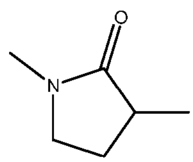
3

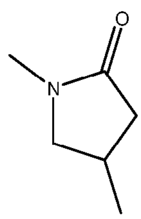
4

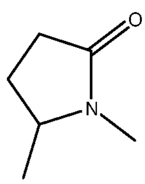
5

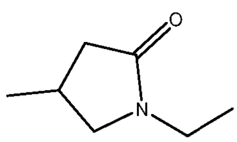
6

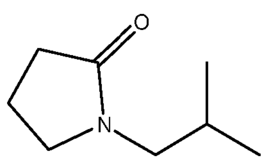
7

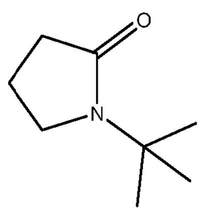
8

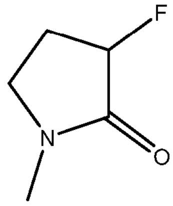
9

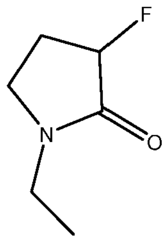
10

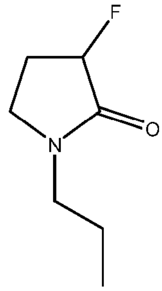
11

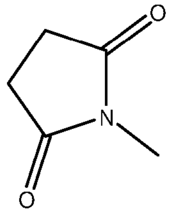
12

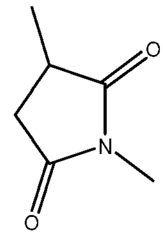
13

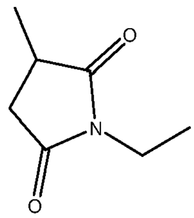
14

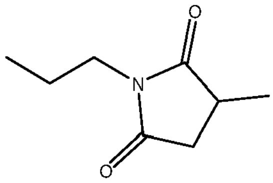
15

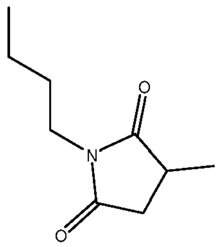
16

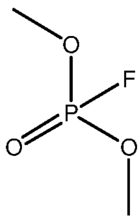
17

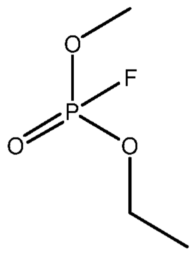
18

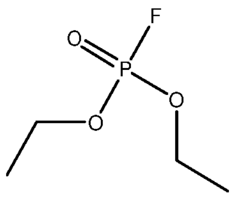
19

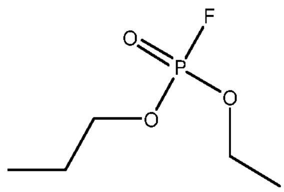
20

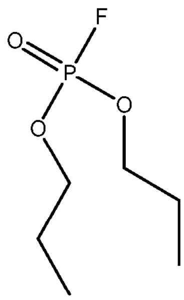
21

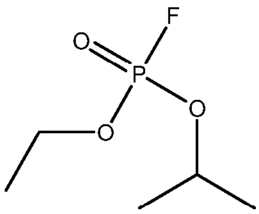
22

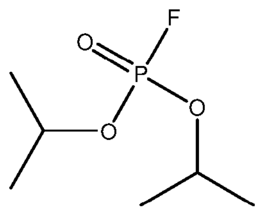
23

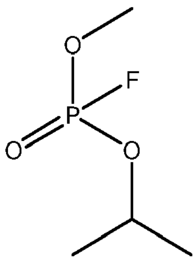 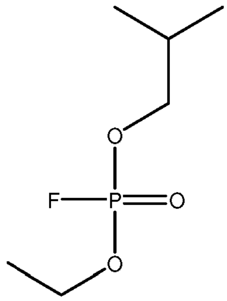 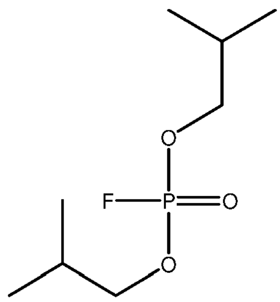

24 25 26

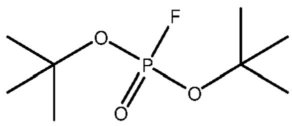 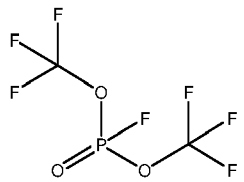 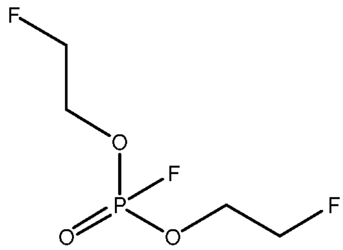

27 28 29

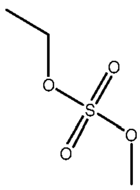 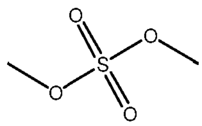 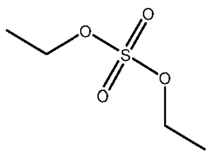 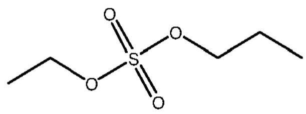

30 31 32 33

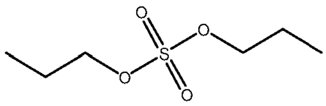 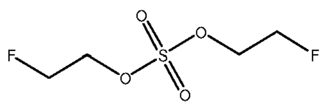 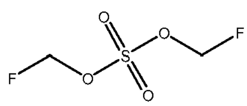

34 35 36.

In some embodiments of this application, the electrolyte includes electrolytic salts $LiPF_6$ and LiFSI, and a molar ratio of $LiPF_6$ to LiFSI is 1:1 to 5.7:1. For example, the molar ratio of $LiPF_6$ to LiFSI may be 1:1, 2:1, 3:1, 4:1, 5:1, or 5.7:1, or falls within a range defined by any two of these ratios. Compared with using the electrolytic salt $LiPF_6$ alone, using both $LiPF_6$ and LiFSI in the electrolyte can enhance the conductivity of the electrolyte and improve lithium precipitation performance. Moreover, LiFSI can form an inorganic SEI layer on the negative electrode interface, enhancing the interfacial stability of a negative electrode. An excessive amount of LiFSI can cause a solvent in the electrolyte to be easily oxidized at a positive electrode interface. Controlling the molar ratio of $LiPF_6$ to LiFSI within the range specified in this application can enhance both the cycling stability and the charging capability of the lithium-ion secondary battery.

In some embodiments of this application, the positive electrode plate includes a positive electrode active material $LiNi_xCo_yMn_zO_2$, where $x+y+z=1$, $0.3 \leq x \leq 0.9$, and $0.1 \leq z \leq 0.7$. The foregoing positive electrode active material can be doped and/or coated. $LiNi_xCo_yMn_zO_2$ is used as the positive electrode active material, the first additive and the second additive more easily decompose on the surface of the positive electrode active material to form the protective layer, enhancing the stability of the positive electrode interface.

In some embodiments of this application, based on the mass of the electrolyte, the percentage content $W_2$ and z of the second additive satisfy: $0.4 \leq W_2/z \leq 30$. In the lithium-ion secondary battery, Mn dissolved from a positive electrode is easily reduced and deposited on a negative electrode, inhibiting the intercalation of negative electrode lithium ions and leading to continuous side reactions, thereby severely affecting the cycling capacity retention rate of the battery. The second additive in this application can react on the positive electrode side and effectively inhibit the dissolution of Mn.

Therefore, controlling the amounts of the second additive and Mn atoms within a specified proportional range can effectively inhibit the dissolution of Mn, thereby improving the cycling performance and charging capability of the battery.

In some embodiments of this application, the electrolyte includes ethylene carbonate, and based on a total mass of the electrolyte, a mass percentage $W_3$% of ethylene carbonate satisfies: $18 \leq W_3 \leq 30$. Ethylene carbonate is added to the electrolyte, so that an effective passivation layer can be formed before the deposition of Mn and Co to isolate the transmission of electrons, thereby inhabiting the deposition of Mn and Co on the negative electrode by enhancing the interfacial film formation on a negative electrode side. If the amount of ethylene carbonate is excessively low, the interfacial film formation effect on the negative electrode is poor; and if the amount of ethylene carbonate is excessively high, the high-temperature storage performance of a cell is deteriorated. Therefore, an appropriate amount of ethylene carbonate is added to the electrolyte to enhance the capacity retention rate and charging capability.

In some embodiments of this application, based on the total mass of the electrolyte, the mass percentage $W_3$% of ethylene carbonate satisfies: $20 \leq W_3 \leq 27$.

The electrolyte of this application further includes a non-aqueous organic solvent. The non-aqueous organic solvent is not particularly limited in this application, provided that the objectives of this application can be achieved. For example, the non-aqueous organic solvent may further include but is not limited to at least one of a carbonate compound, a carboxylate compound, an ether compound, or another organic solvent. The foregoing carbonate compound includes but is not limited to at least one of dimethyl carbonate, diethyl carbonate, ethyl methyl carbonate, methyl propyl carbonate, ethyl propyl carbonate, dipropyl carbonate, propylene carbonate, butylene carbonate, or bis(2,2,2-trifluoroethyl) carbonate. The foregoing carboxylate compound includes but is not limited to at least one of methyl acetate, ethyl acetate, n-propyl acetate, n-butyl acetate, methyl propionate, ethyl propionate, propyl propionate, butyl propionate, methyl butyrate, ethyl butyrate, n-propyl butyrate, butyl butyrate, γ-butyrolactone, 2,2-difluoroethyl acetate, valerolactone, butyrolactone, 2-ethyl fluoroacetate, 2,2-difluoroethyl acetate, or ethyl trifluoroacetate. The foregoing ether compound includes but is not limited to at least one of dimethoxyethane, diethylene glycol diethyl ether, tetraethylene glycol dimethyl ether, dibutyl ether, tetrahydrofuran, 2-methyltetrahydrofuran, or bis(2,2,2-trifluoroethyl) ether. The another organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The electrolytic salt of this application may further include another electrolytic salt, provided that the objectives of this application can be achieved. For example, the another electrolytic salt may include but is not limited to at least one of lithium bis(trifluoromethylsulfonyl)imide, lithium hexafluorocesium oxide, lithium perchlorate, lithium trifluoromethanesulfonate, lithium nitrate, lithium hexafluoroantimonate, lithium hexafluoroarsenate, lithium bis(pentafluoroethylsulfonyl) imide, lithium tris(trifluoromethanesulfonyl)methyl, lithium difluoro(oxalato)phosphate, or lithium tetrafluoro(oxalato) phosphate. The another electrolytic salt may include but is not limited to a lithium salt. Mass percentage of the electrolytic salt is not particularly limited in this application, provided that the objectives of this application can be achieved. For example, based on the mass of the electrolyte, the mass percentage of the foregoing electrolytic salt is 10% to 20%, preferably 12% to 15%. For example, the mass percentage of the electrolytic salt may be 10%, 11%, 12%, 13%, 14%, 15%, 17%, or 20%, or falls within a range defined by any two of these values.

The lithium-ion secondary battery in this application further includes a positive electrode plate. For example, the positive electrode plate includes a positive electrode current collector and a positive electrode active material layer disposed on at least one surface of the positive electrode current collector. The positive electrode current collector is not particularly limited in this application, provided that the objectives of this application can be achieved. For example, the positive electrode current collector may include a metal foil or a composite current collector. For example, the metal foil is an aluminum foil. The composite current collector may include a polymer material matrix and a metal material layer disposed on at least one surface of the polymer material matrix. For example, the material of the metal material layer may include at least one of aluminum, aluminum alloy, nickel, nickel alloy, titanium, titanium alloy, silver, or silver alloy. The polymer material matrix may include at least one of polypropylene, polyethylene terephthalate, polybutylene terephthalate, polystyrene, or polyethylene. Thicknesses of the positive electrode current collector and the positive electrode material layer are not particularly limited in this application, provided that the objectives of this application can be achieved. For example, the thickness of the positive electrode current collector is 5 μm to 20 μm, preferably 6 μm to 18 μm. The thickness of the positive electrode material layer on one surface is 30 μm to 150 μm. In this application, the positive electrode material layer may be disposed on one or two surfaces of the positive electrode current collector in a thickness direction of the positive electrode current collector. In this application, the positive electrode material may further include another positive electrode active materials, for example, lithium cobalt oxide, lithium manganate oxide, or lithium iron phosphate. It should be noted that the "surface" herein may be an entire region of the positive electrode current collector or a partial region of the positive electrode current collector. This is not particularly limited in this application, provided that the objectives of this application can be achieved.

The positive electrode material layer may further include a conductive agent and a binder. The conductive agent and the binder are not particularly limited in this application, provided that the objectives of this application can be achieved. For example, the conductive agent may include but is not limited to a carbon material, a metal, or a conductive

polymer. The carbon material may include at least one of conductive carbon black (Super P), carbon nanotubes (CNTs), carbon nanofiber, natural graphite, artificial graphite, flake graphite, carbon dots, or graphite. The metal may include metal powder or metal fiber of copper, iron, aluminum, or the like. The conductive polymer may include at least one of polythiophene, polypyrrole, polyaniline, polyhenylene, or poly(p-phenylene vinylene). The binder may include but is not limited to at least one of polypropylene glyco, polyacrylic acid sodium, potassium polyacrylate, lithium polyacrylate, polyimide, polyamideimide, hydroxypropyl cellulose, diacetyl cellulose, polyvinyl chloride, carboxylated polyvinyl chloride, polyvinylpyrrolidone, polyethylene, polypropylene, epoxy resin, nylon, styrene-butadiene rubber (SBR), polyvinyl alcohol (PVA), polyvinylidene fluoride (PVDF), polytetrafluoroethylene (PTFE), polyvinyl butyral, water-based acrylic resin, carboxymethyl cellulose (CMC), sodium carboxymethyl cellulose (CMC-Na), or the like.

The lithium-ion secondary battery in this application includes a negative electrode plate. For example, the negative electrode plate includes a negative electrode current collector and a negative electrode material layer disposed on at least one surface of the negative electrode current collector. The negative electrode current collector is not particularly limited in this application, and any negative electrode current collector known in the art can be used, provided that the objectives of this application can be achieved. For example, the negative electrode current collector may include aluminum foil, copper foil, copper alloy foil, nickel foil, stainless steel foil, titanium foil, nickel foam, copper foam, or a polymer substrate coated with conductive metal, where the conductive metal includes but is not limited to copper, nickel, or titanium; and the material of the polymer substrate includes but is not limited to at least one of polyvinyl alcohol, polypropylene, ethylene-propylene copolymer, polyethylene terephthalate, polyethylene naphthalate, or poly-p-phenylene terephthamide. Thicknesses of the negative electrode current collector and the negative electrode material layer are not particularly limited in this application, provided that the objectives of this application can be achieved. For example, the thickness of the negative electrode current collector is 4 μm to 12 μm, and the thickness of the negative electrode material layer on one surface is 30 μm to 150 μm. In this application, the negative electrode material layer may be disposed on one or two surfaces of the negative electrode current collector in a thickness direction of the negative electrode current collector. It should be noted that the "surface" herein may be an entire region of the negative electrode current collector or a partial region of the negative electrode current collector. This is not particularly limited in this application, provided that the objectives of this application can be achieved. Optionally, the negative electrode active material includes a thickener, and the thickener may include but is not limited to sodium carboxymethyl cellulose. The negative electrode material layer of this application may further include a conductive agent and a binder. The conductive agent and the binder are not particularly limited in this application, provided that the objectives of this application can be achieved. For example, the binder and the conductive agent may include but are not limited to at least one of optional substances in the foregoing positive electrode material layer.

The negative electrode material layer of this application includes a negative electrode active material. The type of the negative electrode active material is not particularly limited in this application, and any negative electrode active material known in the art can be used, provided that the objectives of this application can be achieved. For example, the negative electrode active material may include at least one of natural graphite, artificial graphite, mesocarbon microbeads (MCMB), hard carbon, soft carbon, silicon, silicon-carbon composite, $SiO_x$ ($0<x<2$), Li-Sn alloy, Li-Sn-O alloy, Sn, SnO, $SnO_2$, spinel-structure lithium titanate $Li_4Ti_5O_{12}$, Li-Al alloy, or lithium metal.

The lithium-ion secondary battery in this application further includes a separator. The separator is configured to separate the positive electrode plate and the negative electrode plate to prevent short circuit inside the battery and to allow electrolyte ions to pass through freely without affecting electrochemical charge and discharge processes. The separator is not particularly limited in this application, provided that the objectives of this application can be achieved. For example, a material of the separator may include but is not limited to at least one of polyethylene (PE), polypropylene (PP), polytetrafluoroethylene-based polyolefin (PO) separator, a polyester film (for example, a polyethylene terephthalate (PET) film), a cellulose film, a polyimide film (PI), a polyamide film (PA), spandex, or an aramid film. The type of the separator may include but is not limited to at least one of a woven film, a non-woven film (non-woven fabric), a microporous film, a composite film, a laminated film, or a spinning film. The separator in this application may have a porous structure. A porous layer is disposed on at least one surface of the separator, and the porous layer includes inorganic particles and a binder, where the inorganic particles may include at least one of aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder may include at least one of polyvinylidene fluoride, a vinylidene fluoride-hexafluoropropylene copolymer, polyamide, polyacrylonitrile, polyacrylate, polyacrylic acid, polyacrylate salt, sodium carboxymethylcellulose, polyvinylpyrrolidone, polyvinyl ether, polymethyl methacrylate, polytetrafluoroethylene, or polyhexafluoropropylene. A pore size of the porous structure in this application is not particularly limited, provided that the objectives of this application can be achieved. For example, the pore size may be 0.01 μm to 1 μm. The thickness of the separator is not particularly limited in this application, provided that the objectives of this application can be achieved. For example, the thickness may be 3 μm to 500 μm.

The lithium-ion secondary battery in this application further includes a packaging bag for accommodating the positive electrode plate, the separator, the negative electrode plate, the electrolyte, and other known components of an

electrochemical apparatus in the art. The other components are not limited in this application. The packaging bag is not particularly limited in this application and may be any well-known packaging bag in the art, provided that the objectives of this application can be achieved. For example, an aluminum-plastic film packaging bag may be used.

A preparation process of the lithium-ion secondary battery in this application is well known to persons skilled in the art, and is not particularly limited in this application. For example, the preparation process may include but is not limited to the following steps: The positive electrode plate, the separator, and the negative electrode plate are sequentially stacked, and the resulting stack is subjected to operations such as winding and folding as needed to obtain an electrode assembly with a wound structure; the electrode assembly is put into the packaging bag; the electrolyte is injected into the packaging bag; and the packaging bag is sealed to obtain the lithium-ion secondary battery. Alternatively, the positive electrode plate, the separator, and the negative electrode plate are sequentially stacked; then, four corners of an entire laminated structure are fixed by an adhesive tape to obtain an electrode assembly with the laminated structure; the electrode assembly is put into the packaging bag; the electrolyte is injected into the packaging bag; and the packaging bag is sealed to obtain the lithium-ion secondary battery. In addition, an overcurrent prevention element, a guide plate, and the like may also be placed into the packaging bag as needed, so as to prevent pressure increase, overcharge, and overdischarge inside the lithium-ion secondary battery.

According to a second aspect, this application provides an electric apparatus, including the lithium-ion secondary battery according to the first aspect of this application. The electric apparatus provided in the second aspect of this application has good cycling performance and charging capability.

The electric apparatus is not particularly limited in this application, and may be any known electric apparatus used in the prior art. In some embodiments, the electric apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

Examples

The following describes some embodiments of this application more specifically by using examples and comparative examples. Various tests and evaluations are performed in the following methods. In addition, unless otherwise specified, "part" and "%" are based on weight.

**Test methods and equipment:**

**Lithium precipitation performance test:**

A lithium-ion battery was placed in a dry environment at 0°C for 30 minutes, then charged to 4.35 V at a constant current of 1C, charged at a constant voltage of 4.35 V until the current was 0.05C, and then discharged to 3.0 V at a constant current of 0.5C. This was a cycle. After repeating the foregoing charge and discharge process for five times, the lithium-ion battery was charged to 4.35 V at a constant current of 1C, the lithium-ion battery was then disassembled, a lithium precipitation status on a surface of a negative electrode plate was observed. A non-precipitated region on the surface of the negative electrode plate appeared golden or black, and a precipitated region appeared silver-white.

A criterion for judging a lithium precipitation degree of the lithium-ion battery was as follows: based on a size of a precipitation area, a lithium precipitation degree level of the lithium-ion battery was graded from 0 to 15. "0" indicated no lithium precipitation in the lithium-ion battery, and "15" indicated the most severe lithium precipitation degree in the lithium-ion battery.

Precipitation area=0%, corresponding to 0
0%<precipitation area≤5%, corresponding to 1
5%<precipitation area≤8%, corresponding to 2
8%<precipitation area≤10%, corresponding to 3
10%<precipitation area≤15%, corresponding to 4
15%<precipitation area≤20%, corresponding to 5
20%<precipitation area≤25%, corresponding to 6
25%<precipitation area≤30%, corresponding to 7
30%<precipitation area≤35%, corresponding to 8
35%<precipitation area≤40%, corresponding to 9
40%<precipitation area≤50%, corresponding to 10

50%<precipitation area≤55%, corresponding to 11
55%<precipitation area≤60%, corresponding to 12
60%<precipitation area≤65%, corresponding to 13
65%<precipitation area≤70%, corresponding to 14
70%<precipitation area≤100%, corresponding to 15

The percentage of a lithium precipitation area was calculated based on a total area of the negative electrode material layer. As the lithium precipitation area of the lithium-ion battery increased, a lithium precipitation degree level corresponding increased, large areas of lithium precipitation generated a large amount of by-products at an electrode interface, and in severe cases, the battery exhibited swelling. To avoid safety risks during a battery cycling process, the setting of the cycling charge rate was limited by the lithium precipitation degree. Therefore, the higher the lithium precipitation degree, the poorer the charging capability of the lithium-ion battery.

**Cycling performance test:**

Under a condition of 45°C, the lithium-ion battery was charged to 4.35 V at a constant current of 0.5C, left standing for 30 min, and then discharged to 3.0 V at a constant current of 0.5C. This was a charge and discharge cycle. A first-cycle discharge capacity was recorded as $C_1$, 200 charge and discharge cycles were performed according to the foregoing manner, and the discharge capacity after the 200th cycle was recorded as $C_{200}$.

$$\text{Cycling capacity retention rate of the lithium-ion battery} = (C_{200}/C_1) \times 100\%$$

**Dn10, Dn50, and Dn90 particle size test:**

Particle size of active material powder was tested using a laser particle analyzer (equipment model is MasterSizer 2000), and a particle size distribution was calculated using Mie theory. An average value of three parallel samples was taken as a final test result. Dn10 indicated that the particle size of particles accounting for 10% of a total quantity of particles was smaller than the value, Dn50 indicated that the particle size of particles accounting for 50% of the total quantity of particles was smaller than the value, and Dn90 indicated that the particle size of particles accounting for 90% of the total quantity of particles was smaller than the value.

**Example 1-1**

<Preparation of electrolyte>

In an argon atmosphere glove box having a water content of less than 10 ppm, propylene carbonate and diethyl carbonate were mixed at a mass ratio of 3:7 to obtain a base solvent. Lithium hexafluorophosphate, compound 1, and VC were added to the base solvent and stirred uniformly to obtain the electrolyte. Based on a total mass of the electrolyte, the mass percentage of lithium hexafluorophosphate was 12.5%, the mass percentage of compound 1 was 0.8%, and the mass percentage of VC was 1%.

<Preparation of separator>

Aluminum oxide powder, thickener sodium carboxymethyl cellulose, and wetting agent dimethyl siloxane were mixed at a mass ratio of 95:0.5:4.5, deionized water was added, and the mixture was stirred uniformly under the action of a vacuum mixer to obtain a porous coating slurry having a solid content of 5%. The porous coating slurry was uniformly applied on one surface of a polyethylene porous substrate having a thickness of 10 μm. On an area of 1000 $mm^2$, the coating weight was 1 mg. The coated polyethylene porous substrate was placed in an oven at 85°C for four hours to obtain a separator having a porous coating on one side. The foregoing coating process was repeated on the other surface of the polyethylene porous substrate to obtain a separator having porous coatings on both sides.

<Preparation of positive electrode plate>

Lithium cobalt oxide as a positive electrode active material, polyvinylidene fluoride (PVDF) as a positive electrode binder, and conductive carbon black as a conductive agent were mixed at a mass ratio of 96:2:2, N-methylpyrrolidone (NMP) was added, and the mixture was stirred uniformly under the action of the vacuum mixer to obtain a positive electrode

slurry having a solid content of 70 wt%. The positive electrode slurry was uniformly applied on one surface of an aluminum foil having a thickness of 14 μm as a positive electrode current collector, and baked at 120°C for one hour to obtain a positive electrode plate having a positive electrode material layer of 110 μm thickness coated on one side. The foregoing steps were repeated on the other surface of the aluminum foil as the positive electrode current collector to obtain a positive electrode plate having positive electrode material layers coated on both sides. Then the product was dried in vacuum at 120°C for one hour, and then cold-pressed, trimmed, and slit to obtain a positive electrode plate having a specification of 74 mm×867 mm. Compacted density of the positive electrode material layer was $3.4g/cm^3$.

<Preparation of negative electrode plate>

Artificial graphite as a negative electrode active material, sodium carboxymethyl cellulose (CMC-Na), and styrene-butadiene rubber as a negative electrode binder were mixed at a mass ratio of 85:2:13, deionized water was added, and the mixture was stirred uniformly under the action of the vacuum mixer to obtain a negative electrode slurry having a solid content of 65 wt%. Dn50 of the negative electrode active material was 4.1 μm, and Dn90-Dn10=16 μm. The negative electrode slurry was uniformly applied on one surface of a copper foil having a thickness of 12 μm as a negative electrode current collector, and baked at 120°C for one hour to obtain a negative electrode plate having a negative electrode material layer of 100 μm thickness coated on one side. The foregoing steps were repeated on the other surface of the copper foil as the negative electrode current collector to obtain a negative electrode plate having negative electrode material layers coated on both sides. Then the product was dried in vacuum at 120°C for one hour, and then cold-pressed, trimmed, and slit to obtain a negative electrode plate having a specification of 76 mm×875 mm. Compacted density of the negative electrode material layer was $1.6g/cm^3$.

<Preparation of lithium-ion secondary battery>

The separator, positive electrode plate, separator, and negative electrode plate were sequentially stacked so that the separator was between the positive electrode plate and the negative electrode plate, isolating the positive electrode plate from the negative electrode plate. The resulting stack was then subjected to winding, a positive tab was connected to the positive electrode plate, a negative tab was connected to the negative electrode plate, and an electrode assembly was obtained. The electrode assembly was placed into an aluminum foil packaging bag, the positive and negative tabs were drawn out from an internal space of the packaging bag to an external space. After baking at 80°C for 12 hours to remove moisture, the electrolyte was injected, followed by processes such as vacuum packaging, standing, formation, and shaping, to obtain a lithium-ion secondary battery.

**Example 1-2 to Example 1-5**

These values were the same as Example 1-1 except that the values of Dn50 and Dn90-Dn10 of the negative electrode active material in <Preparation of negative electrode plate> were adjusted according to Table 1.

**Example 1-6 to Example 1-21**

These values were the same as Example 1-1 except that the types and mass percentages of a first additive and a second additive in <Preparation of electrolyte> were adjusted according to Table 1 and that a particle size distribution Dn50 and Dn90-Dn10=9.7 of the negative electrode active material in <Preparation of negative electrode plate> were adjusted according to Table 1.

**Example 2-1 to Example 2-7**

These values were the same as Example 1-12 except that the mass percentages of $LiPF_6$ and LiFSI in <Preparation of electrolyte> were adjusted according to Table 2 and that part of LiFSI were used to replace $LiPF_6$, where a molar concentration ratio of a lithium salt indicated a ratio $M_{LiPF6}$ of a molar concentration of $LiPF_6$ to a ratio $M_{LiFSI}$ of a molar concentration of LiFSI. The default $LiPF_6$ having mass percentage of 12.5% was 1 molar concentration, and LiFSI having mass percentage of 15.4% was 1 molar concentration.

**Example 3-1 to Example 3-7**

These values were the same as Example 2-3 except that ethylene carbonate were used to replace diethyl carbonate in equal mass percentages in <Preparation of electrolyte> according to Table 3.

**Example 4-1 to Example 4-8**

These values were the same as Example 3-3 except that NCM811 were used as the positive electrode active material in <Preparation of positive electrode plate>, where z was 0.1, compound 1 having a mass content of 0.2% based on the mass of electrolyte was used as the first additive in <Preparation of electrolyte>, and the content of the second additive VC was adjusted according to Table 4.

**Example 5-1 to Example 5-3**

These values were the same as Example 4-7 except that different compositions of nickel-cobalt-manganese ternary materials were used as the positive electrode active material in <Preparation of positive electrode plate> according to Table 5.

**Comparative example 1-1 to Comparative example 1-3**

These values were the same as Example 1-1 except that no additive additives or only one type of additive was added in <Preparation of electrolyte> and that the particle size distribution Dn90-Dn10 of the negative electrode active material was adjusted.

**Comparative example 1-4 to Comparative example 1-7**

These values were the same as Example 1-1 except that the mass percentages of the first additive and the second additive in <Preparation of electrolyte> were changed and that the particle size distribution Dn90-Dn10 of the negative electrode active material was adjusted according to Table 1.

Preparation parameters and performance parameters of the examples and comparative examples were shown in Table 1 to Table 3.

**Table 1**

| | Dn50 (μm) | Dn90-Dn10 (μm) | First additive | Second additive | $W_1$ | $W_2$ | $W_1+W_2$ | Cycling capacity retention rate (%) | Lithium precipitation degree level |
|---|---|---|---|---|---|---|---|---|---|
| Example 1-1 | 4.1 | 16.0 | Compound 1 | VC | 0.8 | 1 | 1.8 | 51 | 10 |
| Example 1-2 | 4.0 | 13.1 | Compound 1 | VC | 0.8 | 1 | 1.8 | 58 | 8 |
| Example 1-3 | 3.6 | 10.5 | Compound 1 | VC | 0.8 | 1 | 1.8 | 60 | 7 |
| Example 1-4 | 3.3 | 8.3 | Compound 1 | VC | 0.8 | 1 | 1.8 | 60 | 6 |
| Example 1-5 | 3.1 | 6.2 | Compound 1 | VC | 0.8 | 1 | 1.8 | 62 | 6 |
| Example 1-6 | 3.9 | 9.7 | Compound 1 | VC | 0.05 | 1 | 1.05 | 52 | 9 |
| Example 1-7 | 3.9 | 9.7 | Compound 1 | VC | 0.1 | 1 | 1.1 | 55 | 9 |
| Example 1-8 | 3.9 | 9.7 | Compound 1 | VC | 0.4 | 1 | 1.4 | 60 | 9 |
| Example 1-9 | 3.9 | 9.7 | Compound 1 | VC | 0.8 | 1 | 1.8 | 60 | 7 |
| Example 1-10 | 3.9 | 9.7 | Compound 2 | VC | 0.4 | 1 | 1.4 | 61 | 9 |
| Example 1-11 | 3.9 | 9.7 | Compound 2+compound 19 | VC | 0.2+ 0.2 | 1 | 1.4 | 63 | 8 |
| Example 1-12 | 3.9 | 9.7 | Compound 21+compound 25 | VC | 0.1+ 0.3 | 1 | 1.4 | 65 | 9 |
| Example 1-13 | 3.9 | 9.7 | Compound 18 | VC | 0.05 | 0.05 | 0.1 | 49 | 9 |

(continued)

| | Dn50 (μm) | Dn90-Dn10 (μm) | First additive | Second additive | $W_1$ | $W_2$ | $W_1+W_2$ | Cycling capacity retention rate (%) | Lithium precipitation degree level |
|---|---|---|---|---|---|---|---|---|---|
| Example 1-14 | 3.9 | 9.7 | Compound 18 | VC | 0.4 | 0.01 | 0.401 | 52 | 6 |
| Example 1-15 | 3.9 | 9.7 | Compound 18 | VC | 0.4 | 0.5 | 0.9 | 57 | 6 |
| Example 1-16 | 3.9 | 9.7 | Compound 18 | VC | 0.4 | 2 | 2.4 | 59 | 6 |
| Example 1-17 | 3.9 | 9.7 | Compound 18 | VC | 0.4 | 3 | 3.4 | 67 | 7 |
| Example 1-18 | 3.9 | 9.7 | Compound 18 | VC | 0.4 | 4.1 | 4.5 | 65 | 8 |
| Example 1-19 | 3.9 | 9.7 | Compound 18 | PS | 0.4 | 0.5 | 0.9 | 58 | 6 |
| Example 1-20 | 3.9 | 9.7 | Compound 18 | $LiPO_2F_2$ | 0.4 | 0.5 | 0.9 | 61 | 5 |
| Example 1-21 | 3.9 | 9.7 | Compound 18 | VC+PS | 0.4 | 0.2+0.3 | 0.9 | 62 | 6 |
| Comparative example 1-1 | 3.9 | 9.7 | / | / | 0 | 0 | 0 | 13 | 12 |
| Comparative example 1-2 | 3.9 | 9.7 | Compound 1 | / | 0.8 | 0 | 0.8 | 16 | 11 |
| Comparative example 1-3 | 3.9 | 9.7 | / | VC | 0 | 1 | 1 | 25 | 11 |
| Comparative example 1-4 | 3.9 | 9.7 | Compound 1 | VC | 1 | 5 | 6 | 23 | 15 |
| Comparative example 1-5 | 5.2 | 16.5 | Compound 1 | VC | 0.8 | 1 | 1.8 | 28 | 12 |
| Comparative example 1-6 | 5.2 | 16.5 | Compound 1 | VC | 0.02 | 0.02 | 0.04 | 30 | 11 |
| Comparative example 1-7 | 3.9 | 9.7 | Compound 18 | VC | 0.4 | 4.5 | 4.9 | 43 | 10 |
| Note: "/"in Table 1 indicates that there are no relevant parameters. | | | | | | | | | |

From Comparative Example 1-1 to Comparative Example 1-7, it can be seen that good cycling capacity retention rate and charging capability cannot be achieved without additives, or containing only one of the additives, or the amount of the two additives exceeding the scope of this application, or a particle size difference exceeding the scope defined in this application.

The cycling performance and charging capability of the lithium-ion secondary battery change with a particle size range of the negative electrode active material. The smaller a difference of Dn90-Dn10 of the negative electrode active material, the more uniform the particle size distribution of the negative electrode active material, and a moderately thick and uniform protective layer having similar SEI components can be formed during an initial formation process, enhancing the electrochemical stability and charging capability of active and negative electrode material particles during a cycling process. Dn90-Dn10 of the negative electrode active material is adjusted within the required range of this application, and the cycling performance and charging capability of the lithium-ion secondary battery are enhanced to varying degrees. When Dn90-Dn10 exceeds 16 μm, meaning that many large particles or small particles present in the active material, and

overly thin or overly thick protective layers are easily formed by these large particles or small particles, which are not conducive to interface stability.

In Example 1-6 to Example 1-24, the addition amounts of different additives significantly affect the cycling stability and charging capability; both an excessively large addition amount and an excessively small addition amount are not conducive to enhancing the cycling performance and charging capability of the lithium-ion secondary battery.

Table 2

| | Concentration of $LiPF_6$ (%) | Concentration of LiFSI (%) | Molar concentration ratio of lithium salt | Cycling capacity retention rate (%) | Lithium precipitation degree level |
|---|---|---|---|---|---|
| Example 1-12 | 12.5 | 0 | / | 65 | 9 |
| Example 2-1 | 5.6 | 8.47 | 0.8 | 54 | 8 |
| Example 2-2 | 6.25 | 7.7 | 1 | 66 | 6 |
| Example 2-3 | 8.75 | 4.62 | 2.3 | 67 | 7 |
| Example 2-4 | 9 | 3.54 | 3.1 | 68 | 7 |
| Example 2-5 | 10 | 3.08 | 4 | 67 | 7 |
| Example 2-6 | 10.62 | 2.31 | 5.7 | 67 | 8 |
| Example 2-7 | 10.87 | 2 | 6.6 | 67 | 9 |
| Note: "/"in Table 2 indicates that there are no relevant parameters. | | | | | |

LiFSI is used to replace a partial of $LiPF_6$ as the electrolytic salt in the lithium-ion secondary battery. On one hand, this can enhance the conductivity of the electrolyte and improve lithium precipitation performance. On the other hand, LiFSI can decompose itself to form an inorganic SEI layer on a negative electrode interface, enhancing the interfacial stability. However, an excessively large addition of LiFSI can cause a solvent in the electrolyte to be easily oxidized at a positive electrode interface. Therefore, a molar ratio of $LiPF_6$ to LiFSI is controlled within the range specified in this application, which can enhance both the cycling stability and the charging capability of the lithium-ion secondary battery.

**Table 3**

| | Ethylene carbonate (%) | Cycling capacity retention rate (%) | Lithium precipitation degree level |
|---|---|---|---|
| Example 2-3 | 0 | 67 | 7 |
| Example 3-1 | 17 | 68 | 7 |
| Example 3-2 | 18 | 72 | 5 |
| Example 3-3 | 20 | 74 | 5 |
| Example 3-4 | 25 | 78 | 4 |
| Example 3-5 | 28 | 78 | 4 |
| Example 3-6 | 30 | 71 | 6 |
| Example 3-7 | 31 | 68 | 7 |

An appropriate amount of ethylene carbonate is introduced into the electrolyte, which can strengthen the interfacial film formation on a negative electrode side of the lithium-ion secondary battery, thereby inhibiting the deposition of Mn and Co on the negative electrode. From Example 2-3, Example 3-1 to Example 3-7, it can be seen that if the amount of ethylene carbonate is excessively low, the interfacial film formation effect on the negative electrode is poor, and if the amount of ethylene carbonate is excessively high, the high-temperature storage performance of a cell is deteriorated. Therefore, the mass percentage of ethylene carbonate is controlled within the scope of this application, which can enhance the capacity retention rate and charging capability of the lithium-ion secondary battery.

**Table 4**

| | Second additive $W_2$% | $W_2/z$ | Cycling capacity retention rate (%) | Lithium precipitation degree level |
|---|---|---|---|---|
| Example 4-1 | 0.03 | 0.3 | 69 | 4 |
| Example 4-2 | 0.04 | 0.4 | 75 | 3 |
| Example 4-3 | 0.2 | 2 | 75 | 3 |
| Example 4-4 | 0.5 | 5 | 78 | 3 |
| Example 4-5 | 1 | 10 | 80 | 3 |
| Example 4-6 | 2 | 20 | 81 | 4 |
| Example 4-7 | 3 | 30 | 75 | 4 |
| Example 4-8 | 3.1 | 31 | 75 | 5 |

In Table 4, NCM811 is used as the positive electrode active material, where z is 0.1, and a compound having a mass percentage of 2% used as the first additive is added to the electrolyte. The cycling capacity retention rate and the lithium precipitation degree level of the lithium-ion secondary battery change with the addition amount of the second additive. Mn is easily reduced and deposited on the negative electrode, inhibiting the intercalation of negative electrode lithium ions and leading to continuous side reactions. The second additive can react on a positive electrode side and effectively inhibit the dissolution of Mn, reducing side reactions between the electrolyte and the electrode active material, enhancing the interfacial stability of positive and negative electrodes, thereby enhancing the cycling capacity retention rate and charging capability of the lithium-ion battery. The dissolution of Mn cannot be effectively inhibited when the addition amount of the second additive is excessively low, and the dissolution of Mn cannot be further inhibited when the addition amount of the second additive is excessively high. Moreover, the interface impedance of the positive electrode may be increased, deteriorating the charging performance. Therefore, the contents of the second additive and Mn atoms are controlled within the ranges specified in this application, which can effectively enhance the cycling stability and charging capability of the lithium-ion secondary battery.

**Table 5**

| | Positive electrode material | Cycling capacity retention rate (%) | Lithium precipitation degree level |
|---|---|---|---|
| Example 4-7 | NCM811 | 75 | 4 |
| Example 5-1 | NCM622 | 78 | 2 |
| Example 5-2 | NCM523 | 81 | 2 |
| Example 5-3 | NCM111 | 82 | 1 |

It can be seen from Table 5 that NCM111 is used as the positive electrode active material, where a molar ratio of Ni, Co, and Mn is 1:1:1, the lithium-ion secondary battery has the highest cycling capacity retention rate and the lowest lithium precipitation degree level. This indicates that the ratio of Ni, Co, and Mn in the positive electrode active material are controlled, which can effectively enhance the cycling capacity retention rate and reduce the lithium precipitation degree level of the lithium-ion secondary battery.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A lithium-ion secondary battery, comprising an electrolyte, a positive electrode plate, and a negative electrode plate; **characterized in that**, the electrolyte comprises a first additive and a second additive;

    the first additive comprises at least one of compounds represented by formula I, formula II, formula III, or formula IV:

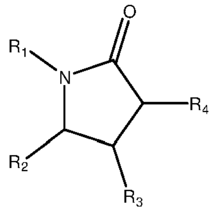 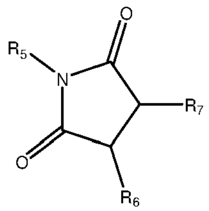 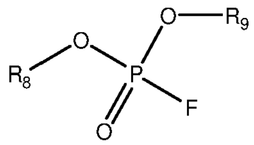 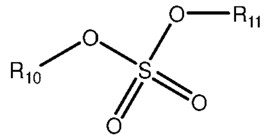

I , II , III , or IV;

wherein $R_1$ to $R_{11}$ are each independently selected from hydrogen, fluorine, and fluorine-substituted or unsubstituted $C_1$ to $C_6$ alkyl groups;

the second additive comprises at least one of vinylene carbonate, 1,3-propanesultone, or lithium difluorophosphate;

based on a mass of the electrolyte, $W_1$% is a mass percentages of the first additive and $W_2$% is a mass percentages of the second additive, $0.05 \leq W_1 \leq 0.8$ and $0.01 \leq W_2 \leq 4.1$; and

the negative electrode plate comprises a negative electrode current collector and a negative electrode material layer disposed on at least one surface of the negative electrode current collector, the negative electrode material layer comprising a negative electrode active material, wherein a Dn50 of the negative electrode active material satisfies: 2.5 μm ≤ Dn50 ≤ 9 μm, a Dn10 and a Dn90 of the negative electrode active material satisfy: Dn90 - Dn10 ≤ 16 μm.

**2.** The lithium-ion secondary battery according to claim 1, **characterized in that**, Dn90 - Dn10 ≤ 13 μm.

**3.** The lithium-ion secondary battery according to claim 1 or 2, **characterized in that**, $0.1 \leq W_1 \leq 0.4$.

**4.** The lithium-ion secondary battery according to any one of claims 1 to 3, **characterized in that**, $0.5 \leq W_2 \leq 4.1$.

**5.** The lithium-ion secondary battery according to any one of claims 1 to 4, **characterized in that**, $0.1 \leq W_1+W_2 \leq 4.5$.

**6.** The lithium-ion secondary battery according to any one of claims 1 to 5, **characterized in that**, the first additive comprises at least one of the following compounds:

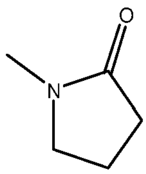 1, 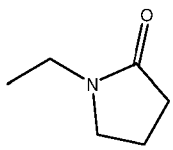 2, 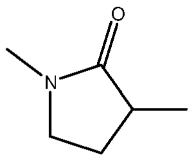 3, 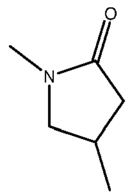 4, 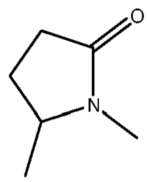 5,

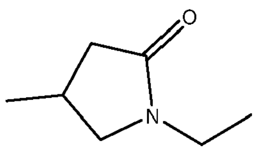 6, 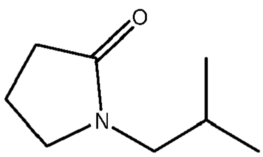 7, 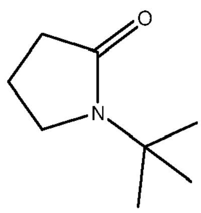 8, 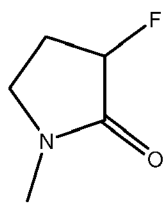 9,

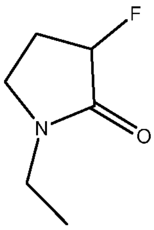
10,
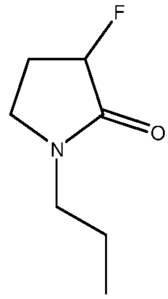
11,
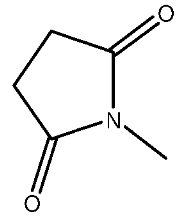
12,
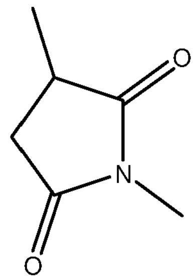
13,

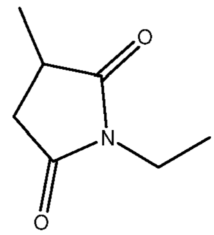
14,
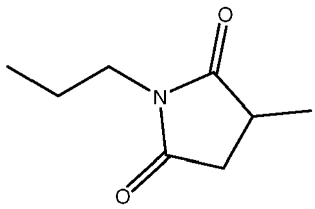
15,
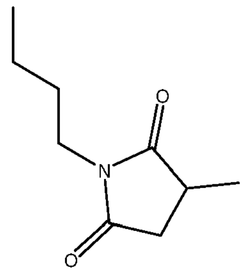
16,

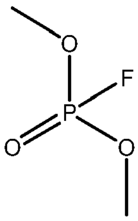
17,
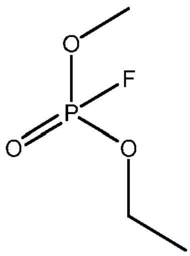
18,
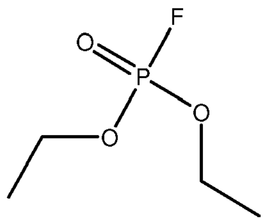
19,
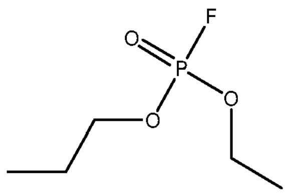
20,

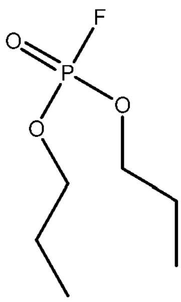
21,
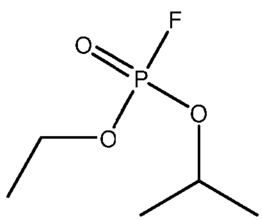
22,
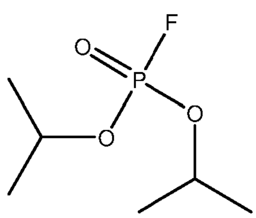
23,
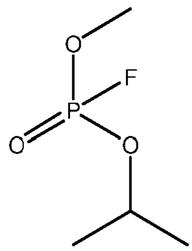
24,

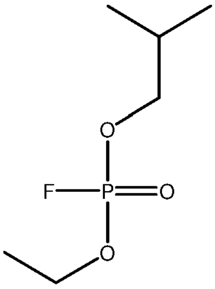 25, 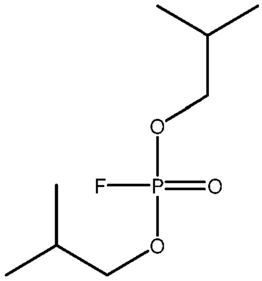 26, 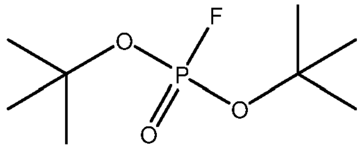 27,

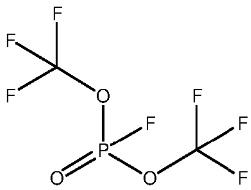 28, 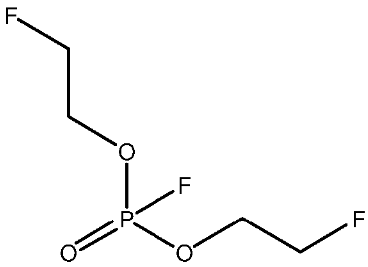 29, 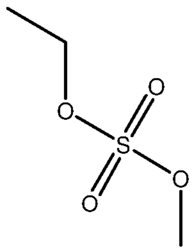 30,

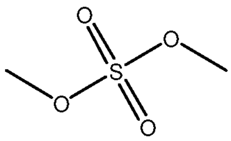 31, 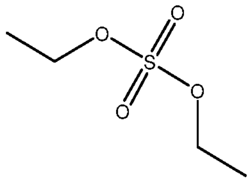 32, 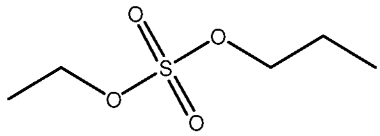 33,

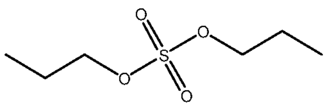 34, 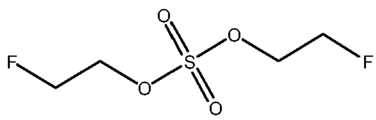 35, 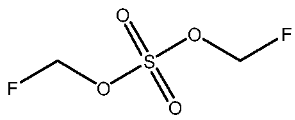 or 36.

**7.** The lithium-ion secondary battery according to any one of claims 1 to 6, **characterized in that**, the electrolyte comprises electrolytic salts $LiPF_6$ and LiFSI;
a molar ratio of $LiPF_6$ to LiFSI is 1:1 to 5.7:1.

**8.** The lithium-ion secondary battery according to any one of claims 1 to 7, **characterized in that**, the positive electrode plate comprises a positive electrode active material $LiNi_xCo_yMn_zO_2$, wherein x+y+z=1, 0.3≤x≤0.9, and 0.1≤z≤0.7.

**9.** The lithium-ion secondary battery according to claim 8, **characterized in that**, $0.4 \leq W_2/z \leq 30$.

**10.** The lithium-ion secondary battery according to any one of claims 1 to 9, **characterized in that**, the electrolyte comprises ethylene carbonate;
based on a total mass of the electrolyte, $W_3$% is a mass percentage of ethylene carbonate, and $18 \leq W_3 \leq 30$.

**11.** The lithium-ion secondary battery according to claim 10, **characterized in that**, $18 \leq W_3 \leq 28$.

**12.** The lithium-ion secondary battery according to claim 10, **characterized in that**, $20 \leq W_3 \leq 27$.

**13.** The lithium-ion secondary battery according to any one of claims 1 to 12, **characterized in that**, $0.9 \leq W_1 + W_2 \leq 4.5$.

**14.** An electric apparatus, comprising the lithium-ion secondary battery according to any one of claims 1 to 13.

Europäisches Patentamt
European Patent Office
Office européen des brevets

# EUROPEAN SEARCH REPORT

Application Number
EP 25 16 4478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/307710 A1 (PRIME PLANET ENERGY & SOLUTIONS, INC.) 28 September 2023 (2023-09-28) * paragraph [0005] - paragraph [0016] * * paragraph [0021] - paragraph [0034] * * paragraph [0042] - paragraph [0051] * * paragraph [0056] - paragraph [0060] * * paragraph [0067] - paragraph [0068] * * comparative examples 3.1, 3.2; examples 3.1-3.12; table 3 * * claims 1, 2, 5-7 * | 1-14 | INV. H01M10/0567 H01M10/0525 H01M4/133 ADD. H01M4/02 H01M4/525 H01M10/0568 H01M10/0569 |
| A | US 2022/123367 A1 (PANASONIC INTELLECTUAL PROPERTY MANAGEMENT CO., LTD.) 21 April 2022 (2022-04-21) * paragraph [0005] - paragraph [0008] * * paragraph [0010] - paragraph [0023] * * paragraph [0028] - paragraph [0034] * * paragraph [0037] - paragraph [0040] * * paragraph [0047] - paragraph [0054] * * paragraph [0066] * * comparative example 1; examples 1-3; table 1; compounds A1-A3, B1 * * example 4; table 2; compound A4 * * claims 1-4, 7 * | 1-14 | TECHNICAL FIELDS SEARCHED (IPC): H01M |

-/--

The present search report has been drawn up for all claims

| Place of search | Date of completion of the search | Examiner |
|---|---|---|
| Munich | 5 August 2025 | Masson, Jean-Pierre |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 16 4478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 357 628 A1 (MITSUBISHI CHEMICAL CORP.) 29 October 2003 (2003-10-29)<br>* paragraph [0010] - paragraph [0012] *<br>* paragraph [0019] - paragraph [0022] *<br>* paragraph [0031] - paragraph [0040] *<br>* paragraph [0042] - paragraph [0049] *<br>* paragraph [0052] - paragraph [0055] *<br>* paragraph [0057] - paragraph [0060] *<br>* paragraph [0063] - paragraph [0077] *<br>* paragraph [0084] *<br>* example 20; table 3 *<br>* examples 42, 45, 46; table 9 *<br>* claims 1, 3, 5, 7, 12-19, 29 *<br>----- | 1-14 | |
| A | US 2008/153005 A1 (BRIDGESTONE CORP.) 26 June 2008 (2008-06-26)<br>* paragraph [0008] - paragraph [0018] *<br>* paragraph [0025] - paragraph [0029] *<br>* paragraph [0031] - paragraph [0033] *<br>* paragraph [0038] - paragraph [0039] *<br>* paragraph [0041] - paragraph [0043] *<br>* example 5 *<br>* claims 1, 6, 9, 10 *<br>----- | 1-14 | |

TECHNICAL FIELDS SEARCHED (IPC)

The present search report has been drawn up for all claims

| Place of search | Date of completion of the search | Examiner |
|---|---|---|
| Munich | 5 August 2025 | Masson, Jean-Pierre |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 25 16 4478

This annex lists the patent family members relating to the patent documents cited in the above-mentioned European search report. The members are as contained in the European Patent Office EDP file on
The European Patent Office is in no way liable for these particulars which are merely given for the purpose of information.

05-08-2025

| Patent document cited in search report | Publication date | Patent family member(s) | Publication date |
|---|---|---|---|
| US 2023307710 A1 | 28-09-2023 | CN 116826163 A | 29-09-2023 |
| | | JP 7529714 B2 | 06-08-2024 |
| | | JP 2023144415 A | 11-10-2023 |
| | | US 2023307710 A1 | 28-09-2023 |
| US 2022123367 A1 | 21-04-2022 | CN 113348569 A | 03-09-2021 |
| | | JP 7454796 B2 | 25-03-2024 |
| | | JP WO2020158223 A1 | 02-12-2021 |
| | | US 2022123367 A1 | 21-04-2022 |
| | | WO 2020158223 A1 | 06-08-2020 |
| EP 1357628 A1 | 29-10-2003 | CN 1411619 A | 16-04-2003 |
| | | EP 1357628 A1 | 29-10-2003 |
| | | US 2006172201 A1 | 03-08-2006 |
| | | WO 02056408 A1 | 18-07-2002 |
| US 2008153005 A1 | 26-06-2008 | EP 1798792 A1 | 20-06-2007 |
| | | US 2008153005 A1 | 26-06-2008 |
| | | WO 2006038614 A1 | 13-04-2006 |

EPO FORM P0459

For more details about this annex : see Official Journal of the European Patent Office, No. 12/82